Europäisches Patentamt

**European Patent Office**

**Office européen des brevets**

(11) Publication number: **0 046 625**

**A2**

(12) **EUROPEAN PATENT APPLICATION**

(21) Application number: **81200936.3**

(22) Date of filing: **21.08.81**

(51) Int. Cl.³: **G 01 K 17/10**

(30) Priority: **21.08.80 NL 8004738**

(43) Date of publication of application:
**03.03.82 Bulletin 82/9**

(84) Designated Contracting States:
**AT BE CH DE FR GB IT LI LU NL SE**

(71) Applicant: **N.V. TOT KEURING VAN ELEKTROTECHNISCHE MATERIALEN**
Utrechtseweg 310 P.O. Box 9035
NL-6800 ET Arnhem(NL)

(72) Inventor: **Beuse, Robert Hendrik Johannes**
Willem de Zwijgerlaan 18
6904 CL Zevenaar(NL)

(72) Inventor: **van Iterson, Han Roelof**
Lebretweg 12
6861 ZX Oosterbeek(NL)

(72) Inventor: **Jansen, Jan Willem**
Troelstralaan 66
6971 CT Brummen(NL)

(72) Inventor: **van den Dungen, Franciscus Hendrikus**
Vleugelnootstraat 11
6823 NT Arnhem(NL)

(74) Representative: **van der Beek, George Frans et al,**
Nederlandsch Octrooibureau Johan de Wittlaan 15 P.O.
Box 29720
NL-2502 LS Den Haag(NL)

(54) **A meter for measuring quantities of heat.**

(57) A heat quantity meter for measuring the quantity of heat abstracted from a circulating flow of liquid by a consumption unit based upon the indirect measurement of the volume flow rate of the liquid, while maintaining a sub heat flow from and/or to the main heat flow transported by the flow of liquid, the volume flow rate of the flow of liquid being determined on the basis of the flow rate dependant heat transfer in the boundary layer of the flow liquid at the location of the sub heat flow, by determining the temperature differential across the boundary layer and the sub heat flow passing through said boundary layer, comprising a conduit section (26) for the supply flow of liquid (24), possibly a conduit section (27) for the drain flow of liquid (25), a thermal connection (3) to at least one of said conduit sections to obtain the sub heat flow, at least one temperature sensor (22,23) on the supply conduit section or/and the drain conduit section and two additional temperature sensors (20,21) on the thermal connection on either side of the heat resistance thereof to determine the quotient of the temperature differential across the fixed heat resistance of the thermal connection and the temperature differential across the boundary layer. The thermal connection and the measuring bodies of the temperature sensors being of easily heat conducting material are taken up in a housing (30) through thermal insulation means (28,29,37,43) having in its entirety such an implementation that a linearized and reproduceable relation is obtained between the said quotient of temperature differentials and the volume flow rate.

Fig-2

1

A meter for measuring quantities of heat.

The invention relates to a meter for measuring the quantity of heat abstracted from a circulating flow of heat by a consumption unit based upon the indirect measurement of the volume flow rate of the liquid, while maintaining a sub heat flow from and/or to the main heat flow transported by the flow of liquid, the volume flow rate of the liquid flow being determined on the basis of the flow rate dependant heat transfer in the boundary layer of the flow of liquid at the location, where the sub heat flow leaves or enters, by determining the temperature differential across the boundary layer and the sub heat flow passing through said boundary layer, comprising a conduit section for the flow of liquid to be supplied, possibly a conduit section for the flow of liquid to be drained, a thermal connection to at least one of said conduit sections to obtain the heat sub flow, at least one temperature sensor disposed on the supply conduit section is and the drain conduit section, and two additional temperature sensors disposed on the thermal connection on respective sides of the heat resistance thereof, by which the quotient of the temperature differential across the fixed heat resistance of the thermal connection and the temperature differential across the boundary layer of the flow of liquid at the location of the junction with the thermal connection is determined. The invention also relates to a method for manufacturing above mentioned heat quantity meter. Such a heat quantity meters known from the international patent application PCT/NL 80/00008 and the Netherlands patent application 79.02313 of applicant.

In the embodiment described in the above mentioned patent applications, the interfering influence of axial heat conduction through the conduit walls of the junction sections near the thermal connection is countered or limited by locally employing heat isolating wall material. This border effect otherwise leads to a deterioration of the non-linear relation between the measurable quotient of temperature differentials and the volume flow rate or mass flow of mass to be indicated.

Moreover, generally the wish exists to arrange the thermal connection to be thermally insulated as best as possible with respect to the junction sections. The temperature sensors or measuring bodies thereof for the flow of liquid to be supplied or also drained have to be disposed in an insulating manner with respect to the thermal connection in order to counter possible leakage heat flows. In fact only the temperature of the undisturbed flow of liquid in the supply conduit section or in the drain conduit section has to be measured.

The object of the invention is to obviate said problems and to provide a heat quantity meter which in view of production can be manufactured in large quantities in as simple manner, while the meter can hardly be influenced from the outside.

In accordance with the invention this object is obtained in a heat quantity meter of the type mentioned in the preamble, such that the thermal connection and the measuring bodies of the temperature sensors being of easily heat conducting material are taken up through thermal insulation means in a housing having in its entirety such an implementation that a linearized and reproduceable relation between said quotient of temperature differentials and the volume flow rate is obtained.

During the manufacture of this heat quantity meter, the three highly heat conducting bodies, i.e. the thermal connection and the two measuring bodies for the temperature sensors, are kept floating or embedded in a badly heat conducting or heat insulating (casting) mass. The three bodies each comprise a through flow hole already before casting or embedding, by which these bodies with the aid of two auxiliary rods of a material which hardly or does not adhere, such as Teflon, are disposed in a mutually spaced relation for the casting or embedding operation. After the harding or the realisation of the embedding said two auxiliary rods can be removed by which two channels come about for the flows of liquid to be supplied and drained. The liquid flow conducting properties of these channels may be improved with the aid of a follow-up treatment, such as honing and the like.

Advantageously, this or another embodiment can also be used to linearize the possibly curved relation between the measurable quotient of temperature differentials and the volume flow rate to be indicated in another manner than purely electronically. This more mechanical or heat flow technical solution, which is mentioned in the above mentioned PCT patent application, introduces a correction by which the precision of measurement can be increased to a high degree. For this purpose, in the present embodiment one or a plurality of indentations or saw-cuts are introduced in the material of the thermal connection.

This is effected such that the temperature measuring point, which determines the temperature differential across the boundary layer and possibly also across the heat resistance portion of the thermal connection, thermally considered comes nearer to the flow and further away from the said thermal connection. At increasing flow of liquid and less than proportionate increasing heat conduction coefficient of the boundary layer, the temperature differential between liquid and temperature measuring point, surrounded by indentation(s), will drop more than in case there are no indentation(s). Owing to this, the quotient of temperature differentials will increase more than proportionate with the heat conducting coefficient of the boundary layer. The increase of the quotient more than proportionate with respect to the coefficient will compensate the less than proportionate increase of the coefficient with respect to the rate of flow such that the relation between quotient and rate of flow is linear within the required tolerances.

This invention can also be used to advantage to control entering phenomena. By entering or inlet phenomena one means that properties of flow, such as degree of turbulence and profile, will change after passing obstacles or changes in section of conduit, for example at the location of the junction or coupling of the external flow conduit and the conduit section for the supply flow of liquid. Thereby the heat conducting coefficient also changes. The relation between the volume flow rate to be measured and finally the quotient of temperature differentials is determined by above mentioned properties of flow in the conduit section. It has appeared possible to make the meter within its tolerances to be independent of the type of flow (degree of turbulence, profile of the flow), presented by the supply and drain conduits, by a correct shaping of the inlet opening and selection of a sufficient flow distance from this opening to the location where the sub heat flow is. It also appeared possible to keep the type of flow at the location of the sub heat flow the same for the whole measuring range. The transition or the coupling section between the external flow conduit and the supply or drain conduit is given such a shape that a cylindrical obstacle, a cross or cone shaped change of diameter or an abrupt change of diameter comes about at the correct distance to the location where the sub heat flow is.

Such a coupling section can have a thermal insulating inner piece as part of the shaping of it.

The invention will further be elucidated with reference to the drawings, in which:

Fig. 1 is a first embodiment of the heat quantity meter;

Fig. 2 is a second embodiment of the heat quantity meter; and

Fig. 3 is a junction coupling section of the second embodiment.

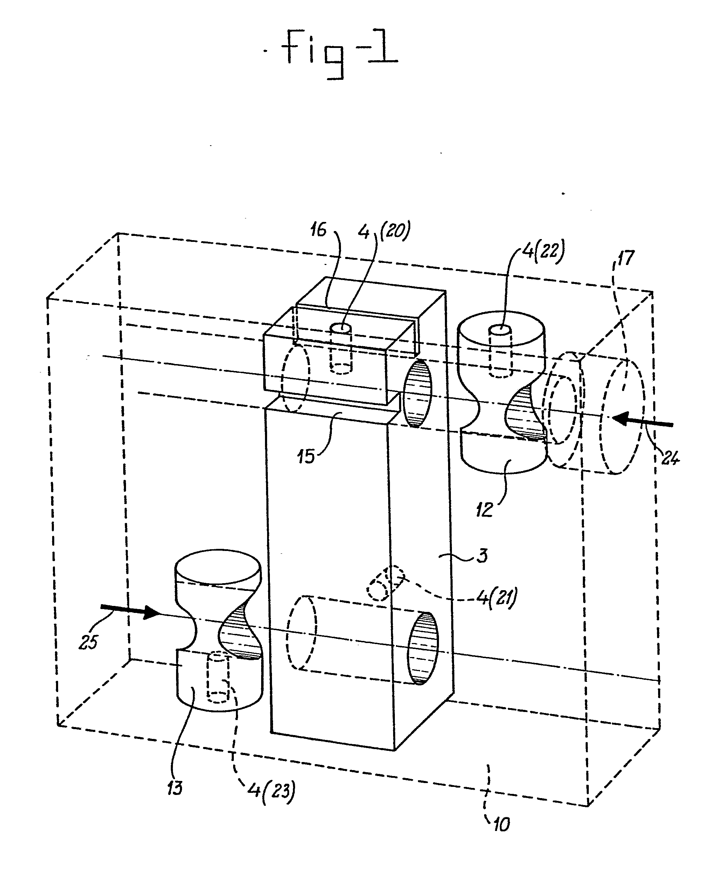

As illustrated in Fig. 1, the reference numeral 10 indicates the housing, the heat insulating embedding material of which can be of synthetic material, such as epoxy resin with ground quartz, poly (ethylene) sulphon or Nouryl. The three bodies of easily heat conducting material, such as the shunt connection 3 and the temperature sensor bushes 12, 13 are indicated in Fig. 1. Recesses 4 are made in the shunt connection 3 at its head side and in the straight portion for the disposal of the temperature sensors 20 and 21. Said bodies 12, 13 which may have a rotation symmetrical form, are thermally well insulated, such that the temperature of the flows of liquid can be easily measured without generating leakage heat flows. These bodies 12, 13 also have recesses 4 for the disposal of temperature sensors 22 and 23 and form measuring points to determine the supply and drain temperature of the flows of liquid 24 and 25 to be supplied and drained, without these flows being mechanically disturbed.

The object of the indentations or saw-cuts 15, 16 in the shunt connection 3 is to introduce such a disturbance in heat conducting field properties of the shunt connection, that a linearisation is obtained of the relation between the measured quotient of the temperature differential and the volume flow rate to be indicated thereby.

In order to connect the housing of the heat quantity meter to the external flow conduits, the four ends of the two flow channels can be given a desired junction shaping, such as screw-thread, or a permanent junction body, such as a coupling nut, during the casting or embedding process. An example is given in Fig. 1 at the inlet side of the flow of liquid 17 to be supplied.

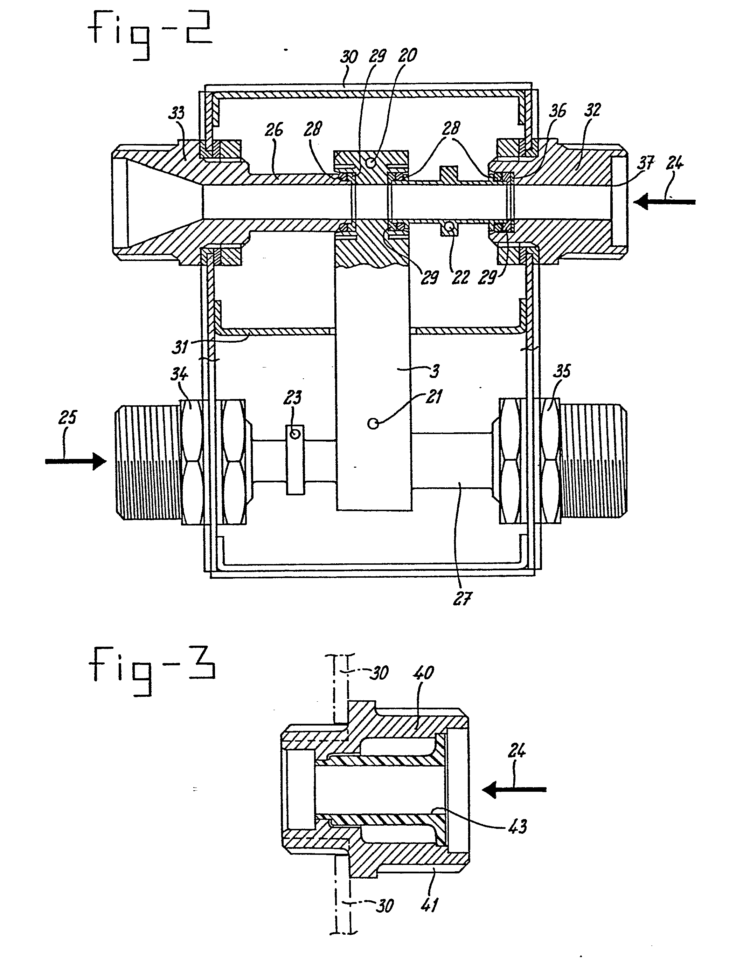

As illustrated in Fig. 2, a side elevation of a second embodiment is given in the lower half, and a cross section of said second embodiment is given in the upper half. A housing of metal is indicated by 30, which housing encloses an open space in which a partition 31 is disposed for strengthening purposes. An opening is formed in the middle of this partition 31 through which opening the thermal shunt connection 3 passes without any contact. Channels are preformed in the extremities of this shunt connection 3, to which channels the supply conduit section 26 for the flow 24 of liquid to be supplied and the drain conduit section 27 for the flow of liquid to be drained are connect by using O-rings 28 of synthetic material and centring rings 29 of synthetic material.

Junction coupling sections 32, 33, 34 and 35 of metal are disposed in the wall of the housing 30 in order to couple the external flow conduits with the supply and drain conduit sections 26, 27 of the meter by using an O-ring of synthetic material, a centring ring 29 of synthetic material and a spring press ring 36 respectively. The associated temperature sensors in the shunt connection 3 are indicated by 20 and 21. The associated temperature sensors on the conduit sections 26 and 27 are indicated by 22 and 23.

The junction coupling section 32 has such a form that when connected to an external flow conduit having a larger diameter an abrupt transition in diameter comes about at 37 on a certain distance to the location where the sub heat flow to the thermal connection 3 is. Owing to this, the flow properties, such as degree of turbulence, profile, entering flow length, of the incoming liquid are controlled in order to cause the meter to be independent within its tolerances of the said flow properties of the supplied flow.

Apart from an abrupt change in diameter, also a cone-shaped change in diameter can be applied. A cylindrical or a crosslike obstacle can also be disposed.

As illustrated in Fig. 3, a section of a variant 40 is shown of a junction coupling section which is taken up in the wall of the housing 30 and which couples the conduit section of the meter for the supply flow of liquid 24 with the external liquid conduit. This external liquid conduit for example can be connected via screw-thread

41 with the junction coupling section 40 which at its other side is coupled to the conduit section of the meter.

An inlet piece 43 of synthetic material is indicated in the junction coupling section 40. This inlet piece does not only provide for the thermal insulation between supplied liquid and the housing of the meter, but it also provides for the abrupt change in diameter in the flow of liquid.

The above mentioned heat quantity meter can also be applied as flow meter as is described in the international patent application PCT/NL 80/00008. In this case, the meter is implemented with only one conduit section for the flow of liquid to be supplied, while the conduit section for the flow of liquid to be drained is omitted and the thermal connection is coupled to a cooling or heating means. The sub heat flow then comes about in the thermal connection to the cooling means or from the heating means. Said single conduit section for the flow of liquid to be supplied can also be connected via a thermal connection on either side to a cooling means at the one side and to a heating means at the other side, such that a sub heat flow from the heating means flows through the flow of liquid in the conduit section to the cooling means.

C L A I M S.

1. A heat quantity meter for measuring the quantity of heat abstracted from a circulating flow of liquid by a consumption unit based upon the indirect measurement of the volume flow rate of the liquid, while maintaining a sub heat flow from and/or to the main heat flow transported by the flow of liquid, the volume flow rate of the flow of liquid being determined on the basis of the flow rate dependant heat transfer in the boundary layer of the flow of liquid at the location where the sub heat flow leaves or enters, by determining the temperature differential across the boundary layer and the sub heat flow passing through said boundary layer, comprising a conduit section for the flow of liquid to be supplied, possibly a conduit section for the flow of liquid to be drained, a thermal connection to at least one of said conduit sections to obtain the sub heat flow, at least one temperature sensor on the supply conduit section or/and the drain conduit section, and two additional temperature sensors on the thermal connection on either side of the heat resistance thereof, by which the quotient of the temperature differential across the fixed heat resistance of the thermal connection and the temperature differential across the boundary layer of the flow of liquid at the location of the junction to the thermal connection is determined, characterized in that the thermal connection and the measuring bodies of the temperature sensors being of easily heat conducting material are taken up in a housing through thermal insulating means in a housing, having in its entirety such an implementation that a linearized and reproduceable relation is obtained between the said quotient of temperature differentials and the volume flow rate.

2. A heat quantity meter according to claim 1, characterized in that the thermal connection and the measuring bodies of the temperature sensors are embedded in a housing of heat insulating material, in which also at least one or two channels are formed through which the flows of liquid are conducted.

3. A heat quantity meter according to claim 3, chartacterized in that the channels in the heat insulating embedding material of the housing and in the thermal connection and in the measuring bodies are formed by temporarily using non adhesive auxiliary rods during the casting or embedding action.

4. A heat quantity meter according to one of the preceding claims, characterized in that the embedding material comprises synthetic material.

5. A heat quantity meter according to one of the preceding claims, characterized in that indentations or saw-cuts are made in the thermal connection near its junction to a conduit section in order to obtain a linearisation of the relation between the measured quotient of temperature differentials and the volume flow rate to be indicated.

6. A heat quantity meter according to one of the preceding claims, characterized in that the supply and/or drain conduit has such a shape or disturbing change of shape that the property of flowability of the flow of liquid, such as degree of turbulence, flow profile, entering flow length after the disturbance, is altered at the location of the sub heat flow with respect to the property of flowability of the flow in the supply and/or drain conduit section.

7. A heat quantity meter according to one of the preceding claims, characterized in that the coupling of the meter to the external supply and/or drain conduit consists of synthetic material or of metal comprising an inlet piece or lining of synthetic material to obtain a thermal insulation between the flow of liquid in the housing of the meter and the housing of the meter per se or between the flow of liquid in the housing of the meter and the supply and/or drain conduit.

8. A meter according to one of the preceding claims applied for determining volume flow rates of liquid.

9. A meter according to claim 8, characterized in that the meter is implemented with a single conduit section to which the thermal connection is connected, the sub heat flow being maintained with the aid of an external heating and/or cooling means.

10. A method for manufacturing a meter according to one of the preceding claims.

---

Fig.1

**Fig-2**

**Fig-3**